# EUROPEAN PATENT APPLICATION

(11) **EP 4 020 376 A1**
(43) Date of publication of application: **29.06.2022**
(21) Application number: 21186648.8
(22) Date of filing: 20.07.2021
(51) Int. Cl.: G06T 5/00

(54) **METHOD AND APPARATUS FOR BUILDING IMAGE ENHANCEMENT MODEL AND FOR IMAGE ENHANCEMENT**

(30) Priority: 24.12.2020 CN 202011550778
(71) Applicant: Beijing Baidu Netcom Science and Technology Co., Ltd., Beijing 100085 (CN)
(72) Inventor: LI, Chao, Beijing, 100085 (CN); HE, Dongliang, Beijing, 100085 (CN); GAO, Wenling, Beijing, 100085 (CN); LI, Fu, Beijing, 100085 (CN); SUN, Hao, Beijing, 100085 (CN)
(74) Representative: dompatent von Kreisler Selting Werner - Partnerschaft von Patent- und Rechtsanwälten mbB

(57) **Abstract**

The present disclosure provides a method and apparatus for building an image enhancement model and for image enhancement, and relates to the technical field of computer vision and deep learning. The method for building an image enhancement model includes: obtaining training data; building a neural network model consisting of a feature extraction module, at least one channel dilated convolution module and a spatial upsampling module, where each channel dilated convolution module includes a spatial downsampling submodule, a channel dilation submodule and a spatial upsampling submodule; training the neural network model by using the video frames and the standard images corresponding to the video frames until the neural network model converges, to obtain an image enhancement model. In addition, the method for image enhancement includes: obtaining a video frame to be processed; taking the video frame to be processed as an input of an image enhancement model, and taking an output result of the image enhancement model as an image enhancement result of the video frame to be processed. The present disclosure can improve the processing efficiency of the built image enhancement model.

## Description

### Field of the Disclosure

The present disclosure relates to technical field of artificial intelligence, and particularly to a method, apparatus, electronic device and readable storage medium for building an image enhancement model and for image enhancement in the technical fields of computer vision and deep learning.

### Background of the Disclosure

As video live broadcasting service arises, the cost at which a server distributes bandwidth becomes a main cost of a live broadcasting service provider. To reduce the bandwidth cost, the most direct manner is distributing a low code rate video, but provides a viewing experience distinct from a high code rate video. A mobile terminal video picture enhancement technique may enhance the quality of the video picture on the mobile device, enhance a video viewing definition so that the video can be viewed with greater definition, and greatly improve the user experience.

However, the video picture enhancement technique in the prior art uses a conventional convolutional neural network, requires a large amount of calculation, and is unlikely to achieve real-time picture enhancement for the live broadcast video at the mobile terminal. In addition, as for the video picture enhancement task at the mobile terminal, a conventional neural network weight-lighting technique such as pruning and distillation is usually confronted with a problem of model collapse, so that effective picture enhancement information cannot be learnt.

### Summary of the Disclosure

A solution employed by the present disclosure to solve the technical problems is to provide a method for building an image enhancement model, including: obtaining training data including a plurality of video frames and standard images corresponding to the video frames; building a neural network model consisting of a feature extraction module, at least one channel dilated convolution module and a spatial upsampling module, where each channel dilated convolution module includes a spatial downsampling submodule, a channel dilation submodule and a spatial upsampling submodule; training the neural network model by using the video frames and the standard images corresponding to the video frames until the neural network model converges, to obtain an image enhancement model.

A solution employed by the present disclosure to solve the technical problems is to provide an apparatus for building an image enhancement model, including: an obtaining unit configured to obtain training data including a plurality of video frames and standard images corresponding to the video frames; a building unit configured to build a neural network model consisting of a feature extraction module, at least one channel dilated convolution module and a spatial upsampling module, where each channel dilated convolution module includes a spatial downsampling submodule, a channel dilation submodule and a spatial upsampling submodule; a training unit configured to train the neural network model by using the video frames and the standard images corresponding to the video frames until the neural network model converges, to obtain an image enhancement model.

A solution employed by the present disclosure to solve the technical problems is to provide a method for image enhancement, including: obtaining a video frame to be processed; taking the video frame to be processed as an input of an image enhancement model, and taking an output result of the image enhancement model as an image enhancement result of the video frame to be processed.

A solution employed by the present disclosure to solve the technical problems is to provide an apparatus for image enhancement, including: a second obtaining unit configured to obtain a video frame to be processed; an enhancement unit configured to take the video frame to be processed as an input of an image enhancement model, and take an output result of the image enhancement model as an image enhancement result of the video frame to be processed.

An electronic device, including: at least one processor; and a memory communicatively connected with the at least one processor; wherein the memory stores instructions executable by the at least one processor, and the instructions are executed by the at least one processor to enable the at least one processor to execute the above methods.

A non-transitory computer-readable storage medium storing computer instructions therein, wherein the computer instructions are used to cause the computer to execute the above methods.

A computer program product, including a computer program which, when executed by a processor, implements the above methods.

An embodiment in the present disclosure has the following advantages or advantageous effects: the present disclosure can reduce the amount of calculation when the image enhancement model generates images, and improve the processing efficiency when the mobile terminal performs image enhancement by using the image enhancement model. Since the technical means of obtaining the image enhancement model by training by using the neural network model based on the channel dilated convolution module, the following problems in the prior art are overcome: a large amount of calculation when performing image enhancement using a conventional convolution neural network, and model collapse encountered when using a neural network weight-lighting technique such as pruning and distillation to perform image enhancement. While the amount of calculation when the image enhancement model generates images is reduced, the processing efficiency when the mobile terminal performs image enhancement by using the image enhancement model can also be improved.

Other effects of the above aspect or possible implementations will be described below in conjunction with specific embodiments.

### Brief Description of Drawings

The figures are intended to facilitate understanding the solutions, not to limit the present disclosure. In the figures,
FIG. 1 illustrates a schematic diagram of a first embodiment according to the present disclosure;
FIG. 2 illustrates a schematic diagram of a second embodiment according to the present disclosure;
FIG. 3 illustrates a schematic diagram of a third embodiment according to the present disclosure;
FIG. 4 illustrates a schematic diagram of a fourth embodiment according to the present disclosure;
FIG. 5 illustrates a schematic diagram of a fifth embodiment according to the present disclosure;
FIG. 6 illustrates a block diagram of an electronic device for implementing a method for building an image enhancement model and a method for image enhancement according to embodiments of the present disclosure.

### Detailed Description of Preferred Embodiments

Exemplary embodiments of the present disclosure are described below with reference to the accompanying drawings, include various details of the embodiments of the present disclosure to facilitate understanding, and should be considered as being only exemplary. Therefore, those having ordinary skill in the art should recognize that various changes and modifications can be made to the embodiments described herein without departing from the scope and spirit of the application. Also, for the sake of clarity and conciseness, depictions of well-known functions and structures are omitted in the following description.

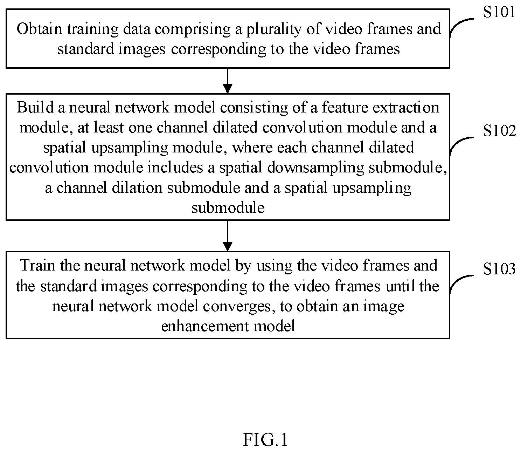

FIG. 1 illustrates a schematic diagram of a first embodiment according to the present disclosure. As shown in FIG. 1, the method for building an image enhancement model according to the present embodiment may specifically comprise the following steps:
S101: obtaining training data comprising a plurality of video frames and standard images corresponding to the video frames;
S102: building a neural network model consisting of a feature extraction module, at least one channel dilated convolution module, and a spatial upsampling module, where each channel dilated convolution module includes a spatial downsampling submodule, a channel dilation submodule, and a spatial upsampling submodule;
S103: training the neural network model by using the video frames and the standard images corresponding to the video frames until the neural network model converges to obtain an image enhancement model.

According to the method for building an image enhancement model in the present embodiment, the neural network based on a channel dilated convolution module is used to train to obtain the image enhancement model. Since the trained image enhancement model uses a light-weighted neural network framework, the amount of calculation when the image enhancement model generates images is substantially reduced, so that the image enhancement model is particularly suitable for image enhancement at the mobile terminal, and improves the processing efficiency when the mobile terminal performs image enhancement.

In the present embodiment, when S101 is performed to obtain training data, continuous video frames included in the video can be obtained as a plurality of video frames, and the standard images corresponding to the video frames are clear images corresponding to the video frames.

In the present embodiment, after the plurality of video frames and standard images corresponding to the video frames are obtained by performing S101, S102 is performed to build the neural network model consisting of the feature extraction module, at least one channel dilated convolution module, and the spatial upsampling module. The submodules of the channel dilated convolution module complete convolution calculation of features in a calculating manner of combining depthwise convolution and pointwise convolution.

It may be appreciated that in the present embodiment, by implementing the conventional convolution calculation by combining depthwise convolution and pointwise convolution, the number of parameters needed in convolution calculation can be reduced, thereby reducing the complexity of neural network calculation; the depthwise convolution is performing convolution of features of different channels respectively by using a convolution kernel, and the pointwise convolution is performing pointwise convolution of features of different channels by using a convolution kernel.

The feature extraction module in the neural network model built by performing S102 in the present embodiment includes a plurality of feature extraction layers, and the feature extraction module uses the plurality of feature extraction layers to obtain deep features of the video frames; the channel dilated convolution module in the neural network model includes a spatial downsampling submodule, a channel dilation submodule and a spatial up-sampling submodule. The spatial down-sampling submodule is configured to down-sample input features and reduce a spatial resolution of the input features; the channel dilation submodule is configured to expand and contract the number of channels of output features of the spatial downsampling submodule; the spatial upsampling submodule is configured to upsample the output features of the channel dilation submodule and enlarge the spatial resolution of the output features; the spatial upsampling module in the neural network model is configured to up-sample the output features of the channel dilation convolution module to obtain a reconstructed video frame, and restore a size of the reconstructed video frame to a size of the input video frame.

Specifically, in the present embodiment, the spatial downsampling submodule in the channel dilated convolution module included in the neural network model built by performing S102 includes a first DepthWise (DW) convolution layer and a first PointWise (PW) convolution layer, and the number of channels of the two convolution layers in the spatial downsampling submodule is the first channel number; the first DepthWise convolution layer is used to perform depthwise convolution calculation on the input features according to the first channel number, to achieve spatial downsampling of the input features; the first pointwise convolution layer is used to perform pointwise convolution calculation on the output features of the first depthwise convolution layer according to the first channel number to achieve feature transformation of the input features.

In the present embodiment, the channel dilation submodule in the channel dilated convolution module included in the neural network model built by performing S102 comprises a first channel dilation layer, a second channel dilation layer and a channel contraction layer, wherein the number of channels corresponding to the first channel dilation layer is the second channel number, the number of channels corresponding to the second channel dilation layer is the third channel number, and the number of channels corresponding to the channel contraction layer is the first channel number; furthermore, in the present embodiment, the first channel number <the second channel number <the third channel number. Generally, the third channel number in the present embodiment is twice the second channel number, and the second channel number is much larger than the first channel number.

In other words, the channel dilation submodule in the present embodiment will set a different number of channels to achieve channel dilation. It is possible to, by dilating the channel of features, increase a receptive field of a convolution kernel used when performing convolution calculation, thereby achieving the purpose of enhancing the image by obtaining richer feature information from the image.

The first channel dilation layer in the present embodiment includes a second depthwise convolution layer and a second pointwise convolution layer. The second depthwise convolution layer is used to perform depthwise convolution calculation on the output features of the spatial downsampling submodule according to the second channel number, to achieve feature fusion; the second pointwise convolution layer is used to perform pointwise convolution calculation on the output features of the second depthwise convolution layer according to the second channel number, to achieve dilation of the channel number of the fused features, and specifically, dilate the channel number of the features from the first channel number to the second channel number.

The second channel dilation layer in the present embodiment includes a third pointwise convolution layer. The third pointwise convolution layer is used to perform pointwise convolution calculation on the output features of the first channel dilation layer according to the third channel number to achieve dilation of the channel number of an output result of the first channel dilation layer, and specifically, dilate the channel number of the features from the second channel number to the third channel number.

The channel contraction layer in the present embodiment includes a fourth depthwise convolution layer and a fourth pointwise convolution layer. The fourth depthwise convolution layer is used to perform depthwise convolution calculation on output features of the second channel dilation layer according to the first channel number, to achieve feature fusion; the fourth pointwise convolution layer is used to perform pointwise convolution calculation on output features of the fourth depthwise convolution layer according to the first channel number, to achieve contraction of the channel number of the fused features, and specifically, contract the channel number of the features from the third channel number to the first channel number.

In the present embodiment, the spatial upsampling submodule in the channel dilated convolution module included in the neural network model built by performing S102 includes a fifth depthwise convolution layer and a fifth pointwise convolution layer. In the spatial upsampling submodule, the number of channels of the two convolution layers is the first channel number; the fifth depthwise convolution layer is used to perform depthwise convolution calculation on output features of the channel dilation submodule according to the first channel number, to achieve the upsampling of the output features; the fifth pointwise convolution layer is used to perform pointwise convolution calculation on output features of the fifth depthwise convolution layer according to the first channel number to achieve the feature transformation of the output features.

It may be appreciated that a size of the convolution kernel in the depthwise convolution layer in the present embodiment is 3×3 or 5×5, and a size of the convolution kernel in the pointwise convolution layer is 1×1×the channel number. For example, the size of the convolution kernel in the first pointwise convolution layer is 1×1×the first channel number, and the size of the convolution kernel in the third pointwise convolution layer is 1×1×the third channel number.

In addition, the channel number for performing convolution calculation in the present embodiment corresponds to the number of features output by the convolution layer. For example, the first channel number is 3, and the first depthwise convolution layer will output three features.

That is to say, in the present embodiment, by setting different channel numbers of the depthwise convolution layer or pointwise convolution layer in the channel dilated convolution module when building the neural network module, expansion and contraction of the channel number of the features of the input video frame is achieved, problems such as model collapse and difficulty in training when training using a conventional light-weighted neural network framework are avoided, the neural network model can be ensured to learn effective image enhancement information, and thereby the trained image enhancement model can generate a clearer image.

In the present embodiment, after the neural network model is built by performing S102, S103 is performed to train the built neural network model by using the video frames and the standard images corresponding to the video frames until the neural network model converges to obtain an image enhancement model. The image enhancement model obtained in the present embodiment can generate a clear image corresponding to the video frame according to the input video frame.

In the present embodiment, when performing S103 to train the neural network model by using the video frames and the standard images corresponding to the video frames until the neural network model converges, the following optional implementation may be employed: taking each video frame as an input of the neural network model and obtaining an output result of the neural network model for each video frame; calculating a loss function according to the output result of the each video frame and the standard image corresponding to the each video frame, wherein an image similarity between the output result and the standard image may be calculated as the loss function in the present embodiment; completing the training of the neural network model in a case of determining that the obtained loss function converges.

In addition, in the present embodiment, when performing S103 to train the neural network model by using the video frames and the standard images corresponding to the video frames until the neural network model converges, the following optional implementation may be employed: obtaining neighboring video frames corresponding to each video frame, wherein the neighboring video frames in the present embodiment may be a preset number of video frames before and after the current video frame; taking each video frame and the neighboring video frames corresponding to the each video frame as an input of the neural network model and obtaining an output result of the neural network model for the each video frame; calculating a loss function according to the output result of each video frame and the standard image corresponding to the each video frame; completing the training of the neural network model in a case of determining that the obtained loss function converges.

It may be appreciated that in the present embodiment, if each video frame and the neighboring video frames corresponding to the each video frame are used to train the neural network model when performing S103, the feature extraction model in the neural network model, after respectively extracting deep features of the current video frame and its corresponding neighboring video frames, takes a result of concatenating a plurality of extracted deep features as an input feature of the current video frame.

That is to say, when the neural network model is trained in the present embodiment, in addition to the current video frame itself, the neighboring video frames corresponding to the current video frame are also used, which enables the neural network model to acquire richer feature information and further improves the definition of the image generated by the trained image enhancement model.

To ensure that the image enhancement model obtained by training can generate a clearer image while having a faster processing speed, a progressive training scheme may be used when performing S104 in the present embodiment, to obtain an image enhancement model which can generate higher-definition images faster by constantly increasing the number of channel dilated convolution modules in the neural network model.

Specifically, in the present embodiment, after training the neural network model by using the video frames and the standard images corresponding to the video frames until the neural network model converges in S103, method may further comprise the following content: determine whether the converged neural network model satisfies preset training requirements; if YES, stop training and obtain the image enhancement model; otherwise, add a preset number of channel dilated convolution modules to an end of the channel dilated convolution module in the neural network model; train the neural network model with the channel dilated convolution modules having been added, by using the video frames and standard images corresponding to the video frames; after determining that the neural network model converges, turn to perform the step of determining whether the converged neural network model satisfies the preset training requirements, and perform the flow cyclically in the above manner until determining that the converged neural network model satisfies the preset training requirements.

In the present embodiment, the preset number of the added channel dilated convolution modules may be one or plural, and may be set according to the user's actual needs in the present embodiment.

In addition, in the present embodiment, when performing S103 to determine whether the converged neural network model satisfies the preset training requirements, it is possible to determine whether a definition of the image generated by the converged neural network model reaches a preset definition, or determine whether a speed at which the converged neural network model generates images is lower than a preset speed.

According to the above method provided in the present embodiment, the image enhancement model is obtained by training by the neural network based on the channel dilated convolution modules. Since the image enhancement model obtained by training uses a light-weighted neural network framework, the amount of calculation when the image enhancement model generates images is substantially reduced, so that the image enhancement model is particularly suitable for image enhancement at the mobile terminal, and improves the processing efficiency when the mobile terminal performs image enhancement.

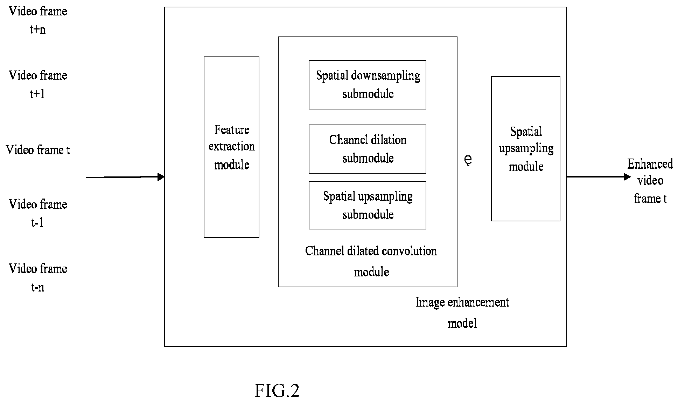

FIG. 2 illustrates a schematic diagram of a second embodiment according to the present disclosure. As shown in FIG. 2, the figure shows an architecture diagram of an image enhancement model built in the present embodiment: take a current video frame and neighboring video frame corresponding to the current video frame as an input of the image enhancement model; after a feature extraction module extracts deep features of the input image frame, input a concatenation result of the deep features into a channel dilated convolution module, the concatenation result being subjected to processing by a spatial downsampling submodule, a channel dilated submodule and a spatial upsampling submodule, a processing result being input into next channel dilated convolution module, the flow being performed repeatedly in this way until an output result of the last channel dilated convolution module is obtained; input the output result of the last channel dilated convolution module into the spatial upsampling module for processing, a processing result being an enhanced video frame output by the image enhancement model and corresponding to the current video frame.

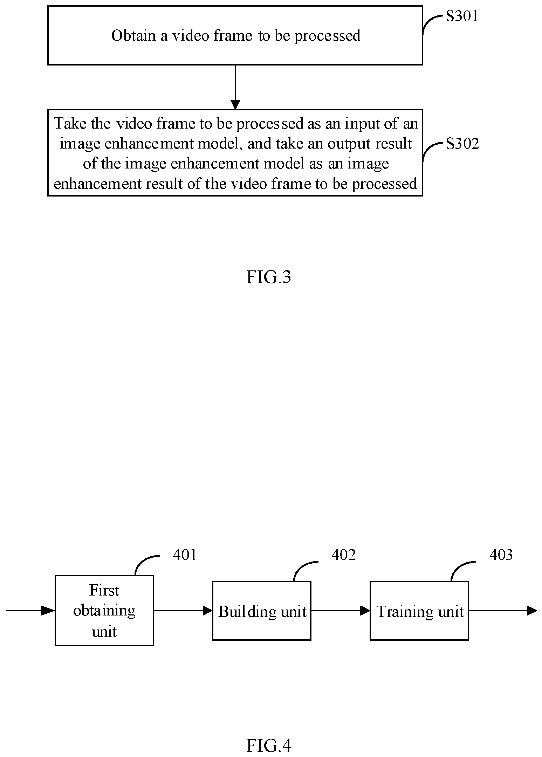

FIG. 3 illustrates a schematic diagram of a third embodiment according to the present disclosure. As shown in FIG. 3, a method for image enhancement in the present embodiment specifically comprises the following steps:
S301: obtaining a video frame to be processed;
S302: taking the video frame to be processed as an input of an image enhancement model, and taking an output result of the image enhancement model as an image enhancement result of the video frame to be processed.

A subject executing the method for image enhancement in the present embodiment is a mobile terminal. The mobile terminal uses the image enhancement model built in the above embodiment to achieve image enhancement of the video to be processed. Since the image enhancement model employs a light-weighted neural network framework, the efficiency of the mobile terminal when performing image enhancement is further improved, and a clearer image enhancement result can be ensured to be obtained faster.

The video frame to be processed obtained by performing S301 in the present embodiment may be a video frame of an ordinary video or a video frame of a live video. That is to say, in the present embodiment, image enhancement may be performed on the video frame of the live video; even if what is obtained by the mobile terminal is the live video with a low code rate, the definition of the video frame in the live video can be improved.

In the present embodiment, after the video frame to be processed is obtained by performing S301, S302 is performed to take the video frame to be processed as an input of an image enhancement model, and take an output result of the image enhancement model as an image enhancement result of the video frame to be processed

It may be understood that the input of the image enhancement model used in performing S302 in the present embodiment may be one frame image, that is, the image enhancement model may implement image enhancement only according to the video frame to be processed as one frame image; the input of the image enhancement model used in performing S302 in the present embodiment may be multiple frame image, i.e., the image enhancement model may implement image enhancement of the video frame to be processed according to the video frame to be processed and other video frames corresponding o the video frame to be processed. Since richer information can be obtained, the definition of the obtained image enhancement result may be further enhanced when the multiple frame image is used to perform image enhancement on the video frame to be processed in the present embodiment.

In the present embodiment, when performing S302 to take the video frame to be processed as an input of an image enhancement model, the following optional implementation mode may employed: obtain neighboring video frames of the video frame to be processed, for example, obtain a preset number of video frames before and after the video frame to be processed, as the neighboring video frames; input the video frame to be processed and the neighboring video frames of the video frame to be processed, as the input of the image enhancement model.

FIG. 4 illustrates a schematic diagram of a fourth embodiment according to the present disclosure. As shown in FIG. 4, an apparatus for building an image enhancement model in the present embodiment comprises:
a first obtaining unit 401 configured to obtain training data comprising a plurality of video frames and standard images corresponding to the video frames;
a building unit 402 configured to build a neural network model consisting of a feature extraction module, at least one channel dilated convolution module and a spatial upsampling module, where each channel dilated convolution module includes a spatial downsampling submodule, a channel dilation submodule and a spatial upsampling submodule;
a training unit 403 configured to train the neural network model by using the video frames and the standard images corresponding to the video frames until the neural network model converges to obtain an image enhancement model.

When obtaining training data, the first obtaining unit 401 may obtain continuous video frames included in the video as a plurality of video frames, the standard images corresponding to the video frames being clear images corresponding to the video frames.

In the present embodiment, after the first obtaining unit 401 obtains the plurality of video frames and standard images corresponding to the video frames, the building unit 402 builds the neural network model consisting of the feature extraction module, at least one channel dilated convolution module and the spatial upsampling module. The submodules of the channel dilated convolution module complete convolution calculation of features in a calculating manner of combining depthwise convolution and pointwise convolution.

The feature extraction module in the neural network model built by the building unit 402 includes a plurality of feature extraction layers, and the feature extraction module uses the plurality of feature extraction layers to obtain deep features of the video frames; the channel dilated convolution module in the neural network model includes a spatial downsampling submodule, a channel dilation submodule and a spatial up-sampling submodule. The spatial down-sampling submodule is configured to down-sample input features and reduce a spatial resolution of the input features; the channel dilation submodule is configured to expand and contract the number of channels of output features of the spatial downsampling submodule; the spatial upsampling submodule is configured to upsample the output features of the channel dilation submodule and enlarge the spatial resolution of the output features; the spatial upsampling module in the neural network model is configured to up-sample the output features of the channel dilation convolution module to obtain a reconstructed video frame, and restore a size of the reconstructed video frame to a size of the input video frame.

Specifically, the spatial downsampling submodule in the channel dilated convolution module included in the neural network model built by the building unit 402 includes a first DepthWise (DW) convolution layer and a first PointWise (PW) convolution layer, and the number of channels of the two convolution layers in the spatial downsampling submodule is the first channel number; the first DepthWise convolution layer is used to perform depthwise convolution calculation on the input features according to the first channel number, to achieve spatial downsampling of the input features; the first pointwise convolution layer is used to perform pointwise convolution calculation on the output features of the first depthwise convolution layer according to the first channel number to achieve feature transformation of the input features.

In the present embodiment, the channel dilation submodule in the channel dilated convolution module included in the neural network model built by the building unit 402 comprises a first channel dilation layer, a second channel dilation layer and a channel contraction layer, wherein the number of channels corresponding to the first channel dilation layer is the second channel number, the number of channels corresponding to the second channel dilation layer is the third channel number, and the number of channels corresponding to the channel contraction layer is the first channel number; furthermore, in the present embodiment, the first channel number <the second channel number <the third channel number. Generally, the third channel number in the present embodiment is twice the second channel number, and the second channel number is much larger than the first channel number.

In other words, the channel dilation submodule built by the building unit 402 will set a different number of channels to achieve channel dilation. It is possible to, by dilating the channel of features, increase a receptive field of a convolution kernel used when performing convolution calculation, thereby achieving the purpose of enhancing the image by obtaining richer feature information from the image.

The first channel dilation layer built by the building unit 402 includes a second depthwise convolution layer and a second pointwise convolution layer. The second depthwise convolution layer is used to perform depthwise convolution calculation on the output features of the spatial downsampling submodule according to the second channel number, to achieve feature fusion; the second pointwise convolution layer is used to perform pointwise convolution calculation on the output features of the second depthwise convolution layer according to the second channel number, to achieve dilation of the channel number of the fused features, and specifically, dilate the channel number of the features from the first channel number to the second channel number.

The second channel dilation layer built by the building unit 402 includes a third pointwise convolution layer. The third pointwise convolution layer is used to perform pointwise convolution calculation on the output features of the first channel dilation layer according to the third channel number to achieve dilation of the channel number of an output result of the first channel dilation layer, and specifically, dilate the channel number of the features from the second channel number to the third channel number.

The channel contraction layer built by the building unit 402 includes a fourth depthwise convolution layer and a fourth pointwise convolution layer. The fourth depthwise convolution layer is used to perform depthwise convolution calculation on output features of the second channel dilation layer according to the first channel number, to achieve feature fusion; the fourth pointwise convolution layer is used to perform pointwise convolution calculation on output features of the fourth depthwise convolution layer according to the first channel number, to achieve contraction of the channel number of the fused features, and specifically, contract the channel number of the features from the third channel number to the first channel number.

The spatial upsampling submodule in the channel dilated convolution module included in the neural network model built by the building unit 402 includes a fifth depthwise convolution layer and a fifth pointwise convolution layer. In the spatial upsampling submodule, the number of channels of the two convolution layers is the first channel number; the fifth depthwise convolution layer is used to perform depthwise convolution calculation on output features of the channel dilation submodule according to the first channel number, to achieve the upsampling of the output features; the fifth pointwise convolution layer is used to perform pointwise convolution calculation on output features of the fifth depthwise convolution layer according to the first channel number to achieve the feature transformation of the output features.

It may be appreciated that a size of the convolution kernel in the depthwise convolution layer built by the building unit 402 is 3×3 or 5×5, and a size of the convolution kernel in the pointwise convolution layer is 1×1×the channel number.

That is to say, by setting different channel numbers of the depthwise convolution layer or pointwise convolution layer in the channel dilated convolution module when building the neural network module, the building unit 402 achieves expansion and contraction of the channel number of the features of the input video frame, avoids problems such as model collapse and difficulty in training when training using a conventional light-weighted neural network framework, ensures the neural network model to learn effective image enhancement information, and thereby enables the trained image enhancement model to generate a clearer image.

In the present embodiment, after the neural network model is built by the building unit 402, the training unit 403 trains the built neural network model by using the video frames and the standard images corresponding to the video frames until the neural network model converges to obtain an image enhancement model. The image enhancement model obtained by the training unit 403 can generate a clear image corresponding to the video frame according to the input video frame.

When training the neural network model by using the video frames and the standard images corresponding to the video frames until the neural network model converges, the training unit 403 may employ the following optional implementation mode: taking each video frame as an input of the neural network model and obtaining an output result of the neural network model for each video frame; calculating a loss function according to the output result of each video frame and the standard image corresponding to each video frame, wherein an image similarity between the output result and the standard image may be calculated as the loss function in the present embodiment; completing the training of the neural network model in a case of determining that the obtained loss function converges.

In addition, when training the neural network model by using the video frames and the standard images corresponding to the video frames until the neural network model converges, the training unit 403 may employ the following optional implementation mode: obtaining neighboring video frames corresponding to each video frame; taking each video frame and the neighboring video frames corresponding to the each video frame as an input of the neural network model and obtaining an output result of the neural network model for the each video frame; calculating a loss function according to the output result of each video frame and the standard image corresponding to the each video frame; completing the training of the neural network model in a case of determining that the obtained loss function converges.

It may be appreciated that if the training unit trains the neural network model with each video frame and the neighboring video frames corresponding to the each video frame, the feature extraction model in the neural network model, after respectively extracting deep features of the current video frame and its corresponding neighboring video frames, takes a result of concatenating a plurality of extracted deep features as an input feature of the current video frame.

That is to say, when training the neural network model, the training unit 403, in addition to using the current video frame itself, uses the neighboring video frames corresponding to the current video frame, which enables the neural network model to acquire richer feature information and further improves the definition of the image generated by the trained image enhancement model.

To ensure that the image enhancement model obtained by training can generate a clearer image while having a faster processing speed, the training unit 403 may employ a progressive training scheme, to obtain an image enhancement model which can generate higher-definition images faster by constantly increasing the number of channel dilated convolution modules in the neural network model.

Specifically, after training the neural network model by using the video frames and the standard images corresponding to the video frames until the neural network model converges, the training unit 403 may further perform the following content: determine whether the converged neural network model satisfies preset training requirements; if YES, stop training and obtain the image enhancement model; otherwise, add a preset number of channel dilated convolution modules to an end of the channel dilated convolution module in the neural network model; train the neural network model with the channel dilated convolution modules having been added, by using the video frames and standard images corresponding to the video frames; after determining that the neural network model converges, turn to perform the step of determining whether the converged neural network model satisfies the preset training requirements, and perform the flow cyclically in the above manner until determining that the converged neural network model satisfies the preset training requirements.

The preset number of the added channel dilated convolution modules added to the training unit 403 may be one or plural, and may be set according to the user's actual needs in the present embodiment.

In addition, when determining whether the converged neural network model satisfies the preset training requirements, the training unit 403 may determine whether a definition of the image generated by the converged neural network model reaches a preset definition, or determine whether a speed at which the converged neural network model generates images is lower than a preset speed.

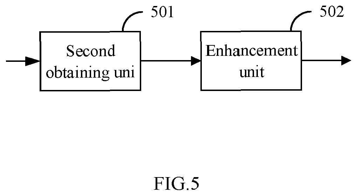

FIG. 5 illustrates a schematic diagram of a fifth embodiment according to the present disclosure. As shown in FIG. 5, an apparatus for image enhancement in the present embodiment comprises:
a second obtaining unit 501 configured to obtain a video frame to be processed;
an enhancement unit 502 configured to take the video frame to be processed as an input of an image enhancement model, and take an output result of the image enhancement model as an image enhancement result of the video frame to be processed.

The video frame to be processed obtained by the second obtaining unit 501 may be a video frame of an ordinary video or a video frame of a live video. That is to say, in the present embodiment, image enhancement may be performed on the video frame of the live video; even if what is obtained by the mobile terminal is the live video with a low code rate, the definition of the video frame in the live video can be improved.

In the present embodiment, after the second obtaining unit 501 obtains the video frame to be processed, the enhancement unit 502 takes the video frame to be processed as an input of an image enhancement model, and take an output result of the image enhancement model as an image enhancement result of the video frame to be processed

It may be understood that the input of the image enhancement model used by the enhancement unit 502 may be one frame image, that is, the image enhancement model may implement image enhancement only according to the video frame to be processed as one frame image; the input of the image enhancement model used by the enhancement unit 502 may be multiple frame image, i.e., the image enhancement model may implement image enhancement of the video frame to be processed according to the video frame to be processed and other video frames corresponding o the video frame to be processed. Since richer information can be obtained, the definition of the obtained image enhancement result may be further enhanced when the enhancement unit 502 uses the multiple frame image to perform image enhancement on the video frame to be processed.

When taking the video frame to be processed as an input of an image enhancement model, the enhancement unit 502 may employ the following optional implementation mode: obtain neighboring video frames of the video frame to be processed, for example, obtain a preset number of video frames before and after the video frame to be processed, as the neighboring video frames; input the video frame to be processed and the neighboring video frames of the video frame to be processed, as the input of the image enhancement model.

According to embodiments of the present disclosure, the present disclosure further provides an electronic device, a computer readable storage medium and a computer program product.

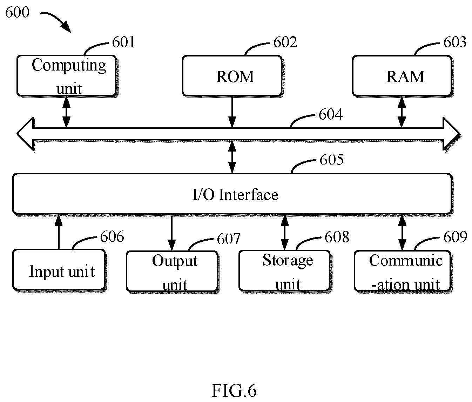

FIG. 6 illustrates a schematic diagram of an electronic device 600 for implementing embodiments of the present disclosure. The electronic device is intended to represent various forms of digital computers, such as laptops, desktops, workstations, personal digital assistants, servers, blade servers, mainframes, and other appropriate computers. The electronic device is further intended to represent various forms of mobile devices, such as personal digital assistants, cellular telephones, smartphones, wearable devices and other similar computing devices. The components shown here, their connections and relationships, and their functions, are meant to be exemplary only, and are not meant to limit implementations of the inventions described and/or claimed in the text here.

As shown in FIG. 6, the device 600 comprises a computing unit 601 that may perform various appropriate actions and processing based on computer program instructions stored in a read-only memory (ROM) 602 or computer program instructions loaded from a storage unit 608 to a random access memory (RAM) 603. In the RAM 603, there further store various programs and data needed for operations of the device 600. The computing unit 601, ROM 602 and RAM 603 are connected to each other via a bus 604. An input/output (I/O) interface 605 is also connected to the bus 604.

Various components in the device 600 are connected to the I/O interface 605, including: an input unit 606 such as a keyboard, a mouse and the like; an output unit 606 including various kinds of displays and a loudspeaker, etc.; a storage unit 608 including a magnetic disk, an optical disk, and etc.; a communication unit 609 including a network card, a modem, and a wireless communication transceiver, etc. The communication unit 609 allows the device 600 to exchange information/ data with other devices through a computer network such as the Internet and/or various kinds of telecommunications networks.

The computing unit 601 may be various general-purpose and/or special-purpose processing components with processing and computing capabilities. Some examples of computing unit 601 include, but are not limited to, Central Processing Unit (CPU), Graphics Processing Unit (GPU), various dedicated artificial intelligence (AI) computing chips, various computing units that run machine learning model algorithms, Digital Signal Processing (DSP), and any appropriate processor, controller, microcontroller, etc. The computing unit 601 executes various methods and processes described above, such as the method for building the image enhancement model or the method for image enhancement. For example, in some embodiments, the method for building the image enhancement model or the method for image enhancement may be implemented as a computer software program, which is tangibly contained in a machine-readable medium, such as the storage unit 608. In some embodiments, part or all of the computer program may be loaded and/or installed on the device 600 via the ROM 602 and/or the communication unit 609. When the computer program is loaded into the RAM 603 and executed by the computing unit 601, one or more steps of the method for building the image enhancement model or the method for image enhancement described above may be executed. Alternatively, in other embodiments, the computing unit 601 may be configured in any other suitable manner (for example, with the aid of firmware) to execute the method for building the image enhancement model or the method for image enhancement.

Various implementations of the system and technology described above in the text may be implemented in a digital electronic circuit system, an integrated circuit system, a Field-Programmable Gate Array (FPGA), an Application Specific Integrated Circuit (ASIC), an Application Specific Standard Parts (ASSP), System on Chip (SOC), Complex Programmable Logic Device (CPLD), computer hardware, firmware, software and/or combinations thereof. These various implementations may include implementation in one or more computer programs that are executable and/or interpretable on a programmable system including at least one programmable processor, which may be special or general purpose, coupled to receive data and instructions from, and to send data and instructions to, a storage system, at least one input device, and at least one output device.

The computer program code for implementing the method of the subject matter described herein may be complied with one or more programming languages. These computer program codes may be provided to a general-purpose computer, a dedicated computer or a processor or controller of other programmable data processing apparatuses, such that when the program codes are executed by the processor or controller, the functions/operations prescribed in the flow chart and/or block diagram are caused to be implemented. The program code may be executed completely on a computer, partly on a computer, partly on a computer as an independent software packet and partly on a remote computer, or completely on a remote computer or server.

In the context of the subject matter described herein, the machine-readable medium may be any tangible medium including or storing a program for or about an instruction executing system, apparatus or device. The machine-readable medium may be a machine-readable signal medium or machine-readable storage medium. The machine-readable medium may include, but not limited to, electronic, magnetic, optical, electro-magnetic, infrared, or semiconductor system, apparatus or device, or any appropriate combination thereof. More detailed examples of the machine-readable storage medium include, an electrical connection having one or more wires, a portable computer magnetic disk, a hard drive, a Random-Access Memory (RAM), a Read-Only Memory (ROM), an Erasable Programmable Read-Only Memory (EPROM or flash memory), an optical fiber, a Portable Compact Disc Read-Only Memory (CD-ROM), an optical storage device, a magnetic storage device, or any appropriate combination thereof.

To provide for interaction with a user, the systems and techniques described here may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back end component (e.g., as a data server), or that includes a middleware component (e.g., an application server), or that includes a front end component (e.g., a client computer having a graphical user interface or a Web browser through which a user may interact with an implementation of the systems and techniques described here), or any combination of such back end, middleware, or front end components. The components of the system may be interconnected by any form or medium of digital data communication (e.g., a communication network). Examples of communication networks include a Local Area Network (LAN), a Wide Area Network (WAN), and the Internet.

The computing system may include clients and servers. A client and server are generally remote from each other and typically interact through a communication network. The relationship of client and server arises by virtue of computer programs running on the respective computers and having a client-server relationship to each other. The server may be a cloud server, also referred to as a cloud computing server or a cloud host, and is a host product in a cloud computing service system to address defects such as great difficulty in management and weak service extensibility in a traditional physical host and VPS (Virtual Private Server). The server may also be a server of a distributed system, or a sever combined with a block chain.

It should be understood that the various forms of processes shown above can be used to reorder, add, or delete steps. For example, the steps described in the present disclosure can be performed in parallel, sequentially, or in different orders as long as the desired results of the technical solutions disclosed in the present disclosure can be achieved, which is not limited herein.

The foregoing specific implementations do not constitute a limitation on the protection scope of the present disclosure. It should be understood by those skilled in the art that various modifications, combinations, sub-combinations and substitutions can be made according to design requirements and other factors. Any modification, equivalent replacement and improvement made within the spirit and principle of the present disclosure shall be included in the protection scope of the present disclosure.

## Claims

1. A method for building an image enhancement model, comprising:
obtaining (S101) training data comprising a plurality of video frames and standard images corresponding to the video frames;
building (S102) a neural network model consisting of a feature extraction module, at least one channel dilated convolution module and a spatial upsampling module, where each channel dilated convolution module includes a spatial downsampling submodule, a channel dilation submodule and a spatial upsampling submodule;
training (S103) the neural network model by using the video frames and the standard images corresponding to the video frames until the neural network model converges, to obtain an image enhancement model.

2. The method according to claim 1, wherein the building a neural network model consisting of a feature extraction module, at least one channel dilated convolution module and a spatial upsampling module comprises:
building the spatial downsampling submodule including a first depthwise convolution layer and a first pointwise convolution layer, the number of channels of the first depthwise convolution layer and the first pointwise convolution layer being the first channel number.

3. The method according to claim 1, wherein the building a neural network model consisting of a feature extraction module, at least one channel dilated convolution module and a spatial upsampling module comprises:
building the channel dilation submodule comprising a first channel dilation layer, a second channel dilation layer and a channel contraction layer;
the first channel dilation layer comprises a second depthwise convolution layer and a second pointwise convolution layer, the number of channels of the second depthwise convolution layer and second pointwise convolution layer being the second channel number;
the second channel dilation layer comprises a third pointwise convolution layer, the number of channels of the third pointwise convolution layer being the third channel number;
the channel contraction layer comprises a fourth depthwise convolution layer and a fourth pointwise convolution layer, the number of channels of the fourth depthwise convolution layer and fourth pointwise convolution layer being the first channel number.

4. The method according to claim 1, wherein the building a neural network model consisting of a feature extraction module, at least one channel dilated convolution module and a spatial upsampling module comprises:
building the spatial upsampling submodule including a fifth depthwise convolution layer and a fifth pointwise convolution layer, the number of channels of the fifth depthwise convolution layer and the fifth pointwise convolution layer being the first channel number.

5. The method according to claim 1, wherein the training the neural network model by using the video frames and the standard images corresponding to the video frames until the neural network model converges comprises:
obtaining neighboring video frames corresponding to each video frame;
taking each video frame and the neighboring video frames corresponding to the each video frame as an input of the neural network model and obtaining an output result of the neural network model for the each video frame;
calculating a loss function according to the output result of each video frame and the standard image corresponding to the each video frame;
completing the training of the neural network model in a case of determining that the obtained loss function converges.

6. The method according to claim 1, further comprising:
after training the neural network model by using the video frames and the standard images corresponding to the video frames until the neural network model converges, determining whether the converged neural network model satisfies preset training requirements;
if the converged neural network model satisfies preset training requirements, stopping training and obtaining the image enhancement model;
otherwise, adding a preset number of channel dilated convolution modules to an end of the channel dilated convolution module in the neural network model;
training the neural network model with the channel dilated convolution modules having been added, by using the video frames and standard images corresponding to the video frames;
after determining that the neural network model converges, turning to perform the step of determining whether the converged neural network model satisfies the preset training requirements, and performing the flow cyclically in the above manner until determining that the converged neural network model satisfies the preset training requirements.

7. A method for image enhancement, comprising:
obtaining a video frame to be processed;
taking the video frame to be processed as an input of an image enhancement model, and taking an output result of the image enhancement model as an image enhancement result of the video frame to be processed;
wherein the image enhancement model is obtained by pre-training according to the method according to any of claims 1-6.

8. The method according to claim 7, wherein the taking the video frame to be processed as an input of an image enhancement model comprises:
obtaining neighboring video frames of the video frame to be processed;
inputting the video frame to be processed and the neighboring video frames, as the input of the image enhancement model.

9. An apparatus for building an image enhancement model, comprising:
a first obtaining unit (401) configured to obtain training data comprising a plurality of video frames and standard images corresponding to the video frames;
a building unit (402) configured to build a neural network model consisting of a feature extraction module, at least one channel dilated convolution module and a spatial upsampling module, where each channel dilated convolution module includes a spatial downsampling submodule, a channel dilation submodule and a spatial upsampling submodule;
a training unit (403) configured to train the neural network model by using the video frames and the standard images corresponding to the video frames until the neural network model converges, to obtain an image enhancement model.

10. The apparatus according to claim 9, wherein when building a neural network model consisting of a feature extraction module, at least one channel dilated convolution module and a spatial upsampling module, the building unit (402) specifically performs:
building the spatial downsampling submodule including a first depthwise convolution layer and a first pointwise convolution layer, the number of channels of the first depthwise convolution layer and the first pointwise convolution layer being the first channel number.

11. The apparatus according to claim 9, wherein when building a neural network model consisting of a feature extraction module, at least one channel dilated convolution module and a spatial upsampling module, the building unit (402) specifically performs:
building the channel dilation submodule comprising a first channel dilation layer, a second channel dilation layer and a channel contraction layer;
the first channel dilation layer comprises a second depthwise convolution layer and a second pointwise convolution layer, the number of channels of the second depthwise convolution layer and second pointwise convolution layer being the second channel number;
the second channel dilation layer comprises a third pointwise convolution layer, the number of channels of the third pointwise convolution layer being the third channel number;
the channel contraction layer comprises a fourth depthwise convolution layer and a fourth pointwise convolution layer, the number of channels of the fourth depthwise convolution layer and fourth pointwise convolution layer being the first channel number.

12. An apparatus for image enhancement, comprising:
a second obtaining unit (501) configured to obtain a video frame to be processed;
an enhancement unit (502) configured to take the video frame to be processed as an input of an image enhancement model, and take an output result of the image enhancement model as an image enhancement result of the video frame to be processed;
wherein the image enhancement model is obtained by pre-training according to the apparatus according to any of claims 9-11.

13. An electronic device, comprising:
at least one processor; and
a memory communicatively connected with the at least one processor; wherein,
the memory stores instructions executable by the at least one processor, and the instructions are executed by the at least one processor to cause the at least one processor to perform the method according to any of claims 1-8.

14. A non-transitory computer-readable storage medium storing computer instructions therein, wherein the computer instructions are used to cause the computer to perform the method according to any of claims 1-8.

15. A computer program product, comprising a computer program which, when executed by a processor, implements the method according to any of claims 1-8.
